# NEUE EUROPÄISCHE PATENTSCHRIFT

(11) **EP 0 348 379 B2**
(45) Veröffentlichungstag und Bekanntmachung des Hinweises auf die Entscheidung über den Einspruch: **26.02.1997**
(45) Hinweis auf die Patenterteilung: 10.03.1993
(21) Anmeldenummer: 89890014.7
(22) Anmeldetag: 19.01.1989
(51) Int. Cl.: H02K 7/102

(54) **Vorrichtung zum Abbremsen von Motoren**
Device for braking motors
Dispositif pour freiner les moteurs électriques

(30) Priorität: 22.06.1988 AT 1624/88
(43) Veröffentlichungstag der Anmeldung: 27.12.1989
(73) Patentinhaber: AUSTRIA Antriebstechnik G. Bauknecht Aktiengesellschaft, 8740 Zeltweg-Spielberg (Steiermark) (AT)
(72) Erfinder: Egger, Otto, A-8911 Admont (AT)
(74) Vertreter: Beer, Manfred, Dipl.-Ing.

(56) Entgegenhaltungen:
- EP-A- 0 136 282
- EP-A- 0 162 481
- DE-A- 2 212 937
- DE-A- 2 751 841
- DE-A- 3 028 580
- DE-C- 3 224 627
- DE-C- 3 407 731
- FR-A- 1 287 163

## Beschreibung

Die Erfindung betrifft eine Vorrichtung zum Abbremsen von Motoren, insbesondere Elektromotoren, mit einer Bremsscheibe, wobei zwischen der Bremsscheibe und einem gehäusefesten Lagerschild des Motors ein Bremsbelag und zwischen dem Rotor des Motors und der Bremsscheibe eine die Bremsscheibe ständiggegen den Bremsbelag drückende Feder angeordnet sind.

Aus der DE-A-2 456 091, DE-B-2 751 841 und der DE-A-2 946 760 sind Bremsvorrichtungen an Elektromotoren bekannt, bei denen beim Einschalten des Motors die Bremse durch elektromagnetische Streufelder gelüftet wird. Daraus resultiert ein relativ aufwendiger Aufbau der in den vorhin genannten Schriften beschriebenen Bremsvorrichtungen.

Für Motoren kleiner Leistung (500 bis 1000 W) wurden ständig mitschleifende Bremsen entwickelt, d.h. Bremsen, bei welchen die Bremsscheibe mit dem Bremsbelag ständig in Reibkontakt steht. Die bekannten Bremsen dieser Bauart arbeiten außerhalb des Motorraumes, wobei die Bremsscheibe auf einem zusätzlichen Teil auf der Welle geführt und axial am Ventilator mittels einer Feder abgestützt ist. Der Bremsbelag ist auf der Bremsscheibe befestigt und ist im Reibkontakt mit der Bremsscheibe-Lagerschild.

Der Erfindung liegt die Aufgabe zugrunde, eine zuverlässige Bremse anzugeben, die sich durch einen möglichst einfachen und kompakten Aufbau auszeichnet.

Erfindungsgemäß wird dies dadurch gelöst, daß die Bremsscheibe zwischen der Innenseite des Lagerschildes und einer Stirnseite des Rotors angeordnet ist und daß an der Bremsscheibe wenigstens ein achsial gegen den Rotor weisender Ansatz vorgesehen ist, der achsial verschiebbar zwischen am Rotor angeordnete Flügel eines Ventilators ragt.

Die erfindungsgemäße Vorrichtung bietet den Vorteil, daß sie innerhalb des Motorraumes angeordnet und deshalb sehr kompakt ist, sowie daß sie sehr einfach aufgebaut ist, da sie ständig mitschleift, d.h., die Bremsscheibe steht ständig mit dem Bremsbelag in Kontakt Da die Bremsscheibe direkt am Ventilator des Rotors angeordnet ist, ist auch eine ständige Kühlung der Bremse gewährleistet.

Eine besonders einfache und kompakte Ausführungsform der erfindungsgemäßen Vorrichtung ist dadurch gekennzeichnet, daß der Ansatz an der Bremsscheibe zwei Seitenflächen aufweist, die zueinander und zu einer durch die Drehachse des Rotors gehenden Ebene parallel sind, und daß die Flügel des Ventilators paarweise mit einem dem Abstand zwischen den Seitenflächen des Ansatzes entsprechenden Abstand zu den Seitenflächen des Ansatzes parallel und in Achsrichtung von einer Stirnfläche des Rotors wegragend angeordnet sind.

Da der Ansatz der Bremsscheibe zwischen die Flügel des Ventilators ragt, kann sich die Bremsscheibe in einfacher Weise in Drehrichtung gegen die Flügel des Ventilators des Rotors abstützen, ist aber in Achsrichtung frei beweglich. Überdies entfällt bei dieser Ausführungsform der bei der bekannten Bremse erforderliche Mitnahmeteil für die Bremsscheibe auf der Rotorwelle.

Die achsiale Führung der Bremsscheibe erfolgt entweder dadurch, daß die Bremsscheibe durch eine Innenfläche axial gleitend auf der Rotorwelle geführt ist oder in noch einfacherer Weise dadurch, daß die Bremsscheibe durch die Seitenflächen der Ansätze an den Flügeln achsial gleitend geführt ist.

Ist die Bremsscheibe so ausgebildet, daß der an der Bremsscheibe vorgesehene Ansatz aus der Bremsscheibe hervorgepreßt ist, kann die Bremsscheibe einfach und billig hergestellt werden.

Die Bremsscheibe wird vorteilhafterweise dadurch gegen den Bremsbelag gedrückt, daß die die Bremsscheibe gegen den Bremsbelag hin belastende Feder in zur Drehachse des Rotors konzentrischen, zylindermantelförmigen Schlitzen in den Flügeln geführt ist, oder daß die die Bremsscheibe gegen den Bremsbelag hin belastende Feder an der radial innenliegenden Seite der Flügel geführt ist, was eine noch einfachere und billigere Ausführungsform der Erfindung darstellt.

Durch die genannten Merkmale der erfindungsgemäßen Vorrichtung wird eventuell auftretender Verschleiß des Bremsbelages automatisch ausgeglichen.

Der vorzugsweise aus Kork bestehende, gegebenenfalls einfach oder mehrfach unterteilte, ringförmige Bremsbelag ist in einer gegebenenfalls unterbrochenen Nut im gehäusefesten Lagerschild des Motors oder in der Bremsscheibe eingesetzt. Durch die Verwendung von Kork als Bremsbelag ist ein praktisch verschleißfreier Betrieb der erfindungsgemäßen Vorrichtung möglich.

Weitere Einzelheiten und Merkmale der erfindungsgemäßen Vorrichtung ergeben sich aus den Unteransprüchen und der Beschreibung des in den Zeichnungen dargestellten Ausführungsbeispieles.

Es zeigt Fig. 1 einen Achsialschnitt durch einen Motor mit einer erfindungsgemäßen Vorrichtung, Fig. 2 in Schrägansicht einen Rotor mit daran angeordneter Feder und Bremsscheibe, die Fig. 3 und 4 zwei Ansichten der erfindungsgemäßen Bremsscheibe und Fig. 5 die Schrägansicht eines Rotors.

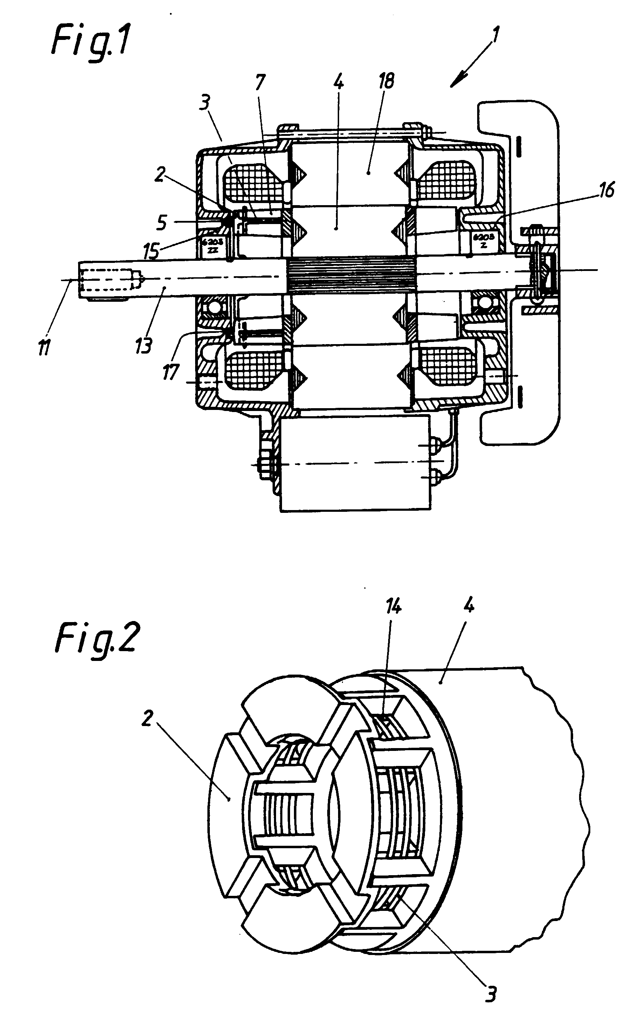

Ein in Fig. 1 dargestellter Motor besteht aus einem Stator 18 und einem Rotor 4, der durch seine Rotorwelle 13 in Lagerschilden 15 und 16 gelagert ist. Am Rotor4 sind Flügel 7 eines Ventilators 8 angeordnet, die neben der Kühlung des Motors auch zur Führung einer eine Bremsscheibe 2 gegen einen Bremsbelag 5 belastenden Feder 3 und zur Abstützung und Mitnahme der Bremsscheibe 2 dienen. Die Feder 3, vorzugsweise eine Schraubenfeder ist in Schlitzen 14 in den Flügeln 7 des Ventilators 8 geführt Diese Schlitze 14 sind bezüglich der Drehachse 11 des Rotors 4 zylindermantelförmig und konzentrisch in den Flügeln 7 des Ventilators 8 angeordnet.

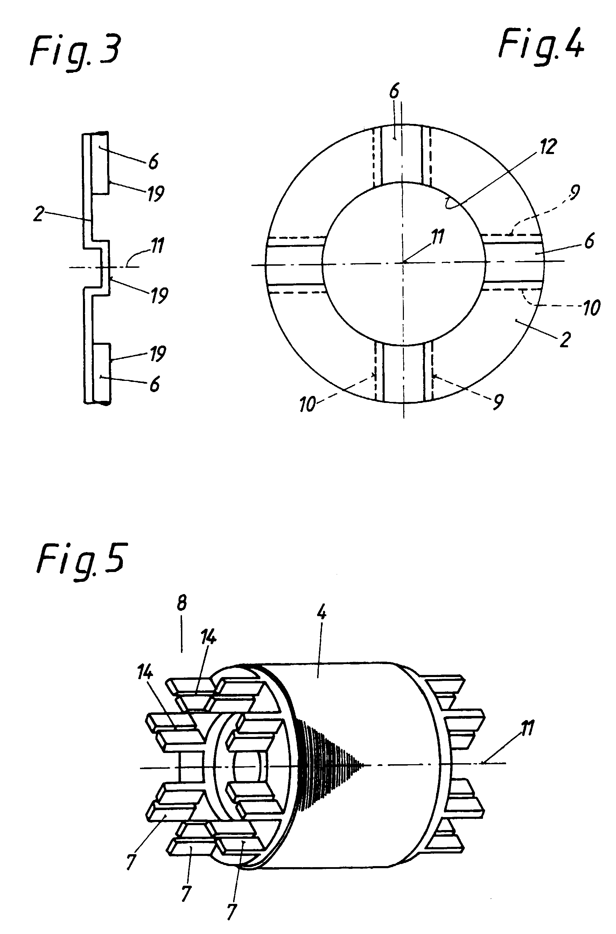

Die in den Fig. 3 und 4 dargestellte Bremsscheibe 2 besteht im wesentlichen aus einer kreisringförmigen Scheibe, aus der vier Ansätze 6 ausgeprägt sind. In einer anderen Ausführungsform können die Ansätze 6 auch aus Aluminium an der Bremsscheibe 2 angegossen sein. Jeder Ansatz 6 besitzt zwei zueinander und zu einer durch die Rotorachse 11 gehenden Ebene parallele Seitenflächen 9 und 10. Diese Seitenflächen liegen an entsprechenden Flächen der Flügel 7 des Ventilators 8 an (Fig. 2). An der dritten von den Ansätzen 6 gebildeten Fläche 19, die zur Ebene der Bremsscheibe parallel ist, liegt das dem Rotor 4 abgekehrte Ende der Feder 3 an. Die Innenfläche 12 der Bremsscheibe 2 dient zur achsialen Führung der Bremsscheibe 2 auf der Rotorwelle 13.

Den Seitenflächen 9, 10, der Bremsscheibe entsprechend parallel und im gleichen Abstand zueinander, wie ihn die Seitenflächen 9 und 10 zueinander aufweisen, sind die Flügel 7 des Ventilators 8 paarweise, in Achsrichtung vom Rotor 4 gegen die Bremsscheibe 2 hin wegragend angeordnet. Da die Bremsscheibe 2 mit ihren Ansätzen 6 zwischen benachbarte Flügel 7 eingreift, Ist sie zwar mit dem Rotor4 in Drehrichtung fest gekuppelt, in Achsrichtung jedoch zum Ausgleich von geringfügig auftretendem Abrieb des Bremsbelages oder von Einbautoleranzen verschiebbar geführt.

Der Bremsbelag 5 kann ein durchgehender Ring sein, der in eine Nut 17 im Lagerschild 15 eingelegt ist und darin z.B. durch Kleben oder Nieten befestigt ist. Der Bremsbelag 5 kann jedoch auch aus Kreisringsegmenten bestehen, die in ebenso gestaltete Nuten 17 eingelegt werden.

Eine weitere, in den Zeichnungen nicht dargestellte Ausführungsvariante der erfindungsgemäßen Vorrichtung ist die, daß der Bremsbelag 5 in Nuten in der Bremsscheibe 2 angeordnet ist.

Der Werkstoff des Bremsbelages 5 ist vorzugsweise Kork, da sich dieser durch eine hohe Abriebfestigkeit auszeichnet Die Bremsscheibe 2 und das Lagerschild 15 sind vorteilhafterweise aus Aluminium gefertigt, da dieser Werkstoff gute Wärmeleitfähigkeit besitzt

Weiters wird die Abfuhr der durch die ständig mitschleifende erfindungsgemäße Bremsvorrichtung entstehenden Wärme besonders durch die Anordnung der Bremsscheibe 2 an den Flügeln 7 des Ventilators 8 gefördert, wodurch ein Überhitzen auf konstruktiv einfache Weise verhindert wird.

Ein weiterer Vorteil der erfindungsgemäßen Vorrichtung ergibt sich durch die kompakte Bauweise, da die erfindungsgemäße Vorrichtung im Motorraum angeordnet ist.

## Patentansprüche

1. Vorrichtung zum Abbremsen von Motoren, insbesondere Elektromotoren, mit einer Bremsscheibe (2), wobei zwischen der Bremsscheibe (2) und einem gehäusefesten Lagerschild (15) des Motors (1) ein Bremsbelag (5) und zwischen dem Rotor (4) des Motors (1) und der Bremsscheibe (2) eine die Bremsscheibe (2) ständiggegen den Bremsbelag (5) drückende Feder (3) angeordnet sind, dadurch gekennzeichnet, daß die Bremsscheibe (2) zwischen der Innenseite des Lagerschildes (15) und einer Stirnseite des Rotors (4) angeordnet ist und daß an der Bremsscheibe (2) wenigstens ein achsial gegen den Rotor (4) weisender Ansatz (6) vorgesehen ist, der achsial verschiebbar zwischen am Rotor (4) angeordnete, einen Ventilator (8) bildende Flügel (7) ragt.

2. Vorrichtung nach Anspruch 1, dadurch gekennzeichnet, daß der Ansatz (6) der Bremsscheibe (2) zwei Seitenflächen (9, 10) aufweist, die zueinander und zu einer durch die Drehachse (11) des Rotors (4) gehenden Ebene parallel sind.

3. Vorrichtung nach Anspruch 1, dadurch gekennzeichnet, daß der Ansatz (6) der Bremsscheibe (2) zwei Seitenflächen (9, 10) aufweist, die in durch die Drehachse (11) gehenden Ebenen liegen.

4. Vorrichtung nach Anspruch 1, dadurch gekennzeichnet, daß der Ansatz (6) der Bremsscheibe (2) zwei Seitenflächen (9, 10) aufweist, die zu je einer durch die Drehachse (11) gehenden Ebene im Winkel geneigt sind.

5. Vorrichtung nach einem der Ansprüche 1 bis 4, dadurch gekennzeichnet, daß die Flügel (7) des Ventilators (8) paarweise mit einem dem Abstand zwischen den Seitenflächen (9, 10) des Ansatzes (6) entsprechenden Abstand, zu den Seitenflächen (9, 10) des Ansatzes (6) parallel und in Achsrichtung von einer Stirnfläche des Rotors (4) wegragend angeordnet sind.

6. Vorrichtung nach einem der Ansprüche 1, 3 oder 4, dadurch gekennzeichnet, daß die Flügel (7) des Ventilators (8) mit einem in Umfangsrichtung konstanten, dem Abstand zwischen den Seitenflächen (9, 10) des Ansatzes (6) entsprechenden Abstand, zu den Seitenflächen (9, 10) des Ansatzes (6) parallel und in Achsrichtung von einer Stirnfläche des Rotors (4) wegragend angeordnet sind.

7. Vorrichtung nach einem der Ansprüche 1 bis 6, dadurch gekennzeichnet, daß der an der Bremsscheibe (2) vorgesehene Ansatz (6) aus der Bremsscheibe (2) hervorgepreßt ist.

8. Vorrichtung nach einem der Ansprüche 1 bis 6, dadurch gekennzeichnet, daß der an der Bremsscheibe (2) vorgesehene Ansatz (6) an der Bremsscheibe angegossen ist.

9. Vorrichtung nach einem der Ansprüche 1 bis 8, dadurch gekennzeichnet, daß die Bremsscheibe (2) durch eine Innenfläche (12) axial gleitend auf der Rotorwelle (13) geführt ist.

10. Vorrichtung nach einem der Ansprüche 1 bis 8, dadurch gekennzeichnet, daß die Bremsscheibe (2) durch die Seitenflächen (9, 10) der Ansätze (6) an den Flügeln (7) achsial gleitend geführt ist.

11. Vorrichtung nach einem der Ansprüche 1 bis 10, dadurch gekennzeichnet, daß die die Bremsscheibe (2) gegen den Bremsbelag (5) hin belastende Feder (3) in zur Drehachse (11) des Rotors (4) konzentrischen, zylindermantelförmigen Schlitzen (14) in den Flügeln (7) geführt ist

12. Vorrichtung nach einem der Ansprüche 1 bis 10, dadurch gekennzeichnet, daß die die Bremsscheibe (2) gegen den Bremsbelag (5) hin belastende Feder (3) an der radial innenliegenden Seite der Flügel (7) geführt ist.

13. Vorrichtung nach einem der Ansprüche 1 bis 12, dadurch gekennzeichnet, daß der vorzugsweise aus Kork bestehende, gegebenenfalls ein- oder mehrfach unterteilte, ringförmige Bremsbelag (5) in einer gegebenenfalls unterbrochenen Nut (17) im gehäusefesten Lagerschild (15) des Motors (1) oder in der Bremsscheibe (2) eingesetzt ist.

## Claims

1. A device for braking motors, especially electric motors, with a brake disc (2), wherein a brake lining is arranged between the brake disc (2) and a bearing casing (15) of the motor (1) fast with the housing and a spring (3) pressing the brake disc (2) in constant against brake lining (5) is arranged between the rotor (4) of the motor (1) and the brake disc (2), characterized in that the brake disc (2) is arranged between the inner face of the bearing casing (15) and an end face of the rotor (4), and in that at least one projection (6) is provided on the brake disc (2) facing axially towards the rotor (4), the projection projecting with freedom of axial movement between blades (7) arranged on the rotor (4) and forming a fan (8).

2. A device according to claim 1, characterized in that the projection (6) of the brake disc (2) has two lateral faces (9, 10) which are parallel to one another and to a plane passing through the axis of rotation (11) of the rotor (4).

3. A device according to claim 1, characterized in that the projection (6) of the brake disc (2) has two lateral faces (9, 10) which lie in planes passing through the axis of rotation (11).

4. A device according to claim 1, characterized in that the projection (6) of the brake disc (2) has two lateral faces (9, 10) which are each inclined at an angle to a plane passing through the axis of rotation (11).

5. A device according to any one of claims 1 to 4, characterized in that the blades (7) of the fan (8) are arranged in pairs with a spacing corresponding to the spacing between the side faces (9, 10) of the projection (6), parallel to the side faces (9, 10) of the projection (6) and projecting away from an end face of the rotor (4) in the axial direction.

6. A device according to claim 1, 3 or 4, characterized in that the blades (7) of the fan (8) are arranged with a spacing which is constant in the peripheral direction, corresponding to the spacing between the side faces (9, 10) of the projection (6), parallel to the side faces (9, 10) of the projection (6) and projecting away from an end face of the rotor (4) in the axial direction.

7. A device according to any one of claims 1 to 6, characterized in that the projection (6) provided on the brake disc (2) is pressed out of the brake disc (2).

8. A device according to any one of claims 1 to 6, characterized in that the projection (6) provided on the brake disc (2) is cast on the brake disc.

9. A device according to any one of claims 1 to 8, characterized in that the brake disc (2) is guided by an inner surface (12) for axial sliding on the rotor shaft (13).

10. A device according to any one of claims 1 to 8, characterized in that the brake disc (2) is guided for axial sliding on the blades (7) by the side faces (9, 10) of the projection (6).

11. A device according to any one of claims 1 to 10, characterized in that spring (3) biasing the brake disc (2) against the brake lining (5) is guided in slots (14) in the blades (7) concentric with the axis of rotation of the rotor (4) and forming cylindrical walls.

12. A device according to any one of claims 1 to 10, characterized in that the spring (3) biasing the brake disc (2) against the brake lining (5) is guided on the radially inner sides of the blades (7).

13. A device according to any one of claims 1 to 12, characterized in that the annular brake lining (5), preferably consisting of cork in one piece or a plurality of pieces as desired, is fitted in a preferably uninterrupted groove (17) in the bearing casing (15) of the motor (1) fixed to the housing or is fitted in the brake disc (2).

## Revendications

1. Dispositif pour ie freinage de moteurs, en particulier de moteurs électriques, comportant un disque de frein (2), entre le disque de frein (2) et une fiasque (15) du moteur (1) solidaire du boîtier, étant prévue une garniture de frein (5) et, entre le rotor (4) du moteur (1) et le disque de frein (2), étant prévu un ressort (3) repoussant le disque de frein (2) en permanence contre la garniture de frein (5), caractérisé en ce que le disque de frein (2) est situé entre le côté interne de la flasque (15) et le côté frontal du rotor (4) et en ce que, sur le disque de frein (2), est prévue au moins une saillie (6) axiaie tournée contre le rotor (4), qui se dresse axiaiement mobiie entre des ailes (7), formant un ventilateur (8), disposées sur le rotor (4).

2. Dispositif suivant la revendication 1, caractérisé en ce que la saillie (6) du disque de frein (2) présente deux surfaces latérales (9, 10) qui sont parallèles entre elles et à un plan passant par l'axe de rotation (11) du rotor (4).

3. Dispositif suivant la revendication 1, caractérisé en ce que la saillie (6) du disque de frein (2) présente deux surfaces latérales (9, 10) qui sont dans des plans passant par l'axe de rotation (11).

4. Dispositif suivant la revendication 1, caractérisé en ce que la saillie (6) du disque de frein (2) présente deux surfaces latérales (9, 10 ) qui sont respectivement angulairement inclinées par rapport à un plan passant par l'axe de rotation (11).

5. Dispositif suivant l'une des revendications 1 à 4, caractérisé en ce que les ailes (7) du ventilateur (8) se dressent par paires avec une distance correspondant à la distance entre les surfaces latérales (9. 10) de la saillie (6), parallèlement aux surfaces latérales (9, 10) de la saillie (6) et dans la direction axiale à partir d'une surface frontale du rotor (4).

6. Dispositif suivant l'une des revendications 1, 3 ou 4, caractérisé en ce que les ailes (7) du ventilateur (8) se dressent avec une distante constante dans le sens circonférentiel, correspondant à la distance entre les surfaces latérales (9, 10) de la saillie, parallèlement aux surfaces latérales (9, 10) de la saillie (6) et dans la direction axiale à partir d'une surface frontale du rotor (4).

7. Dispositif suivant l'une des revendications 1 à 6, caractérisé en ce que la saillie (6) prévue sur le disque de frein (2) est emboutie sur le disque de frein (2).

8. Dispositif suivant l'une des revendications 1 à 6, caractérisé en ce que la saillie (6), prévue sur le disque de frein (2), vient de fonderie avec le disque de frein.

9. Dispositif suivant l'une des revendications 1 à 8, caractérisé en ce que le disque de frein (2) est guidé par une surface interne (12) glissant axialement sur l'axe de rotor (13).

10. Dispositif suivant l'une des revendications 1 à 8, caractérisé en ce que le disque de frein (2) est guidé en glissant axialement par les surfaces latérales (9, 10) des saillies (6) sur les ailes (7).

11. Dispositif suivant l'une des revendications 1 à 10, caractérisé en ce que le ressort (3) repoussant le disque de frein (2) contre la garniture de frein (5) est guidé, dans les ailes (7), dans des fentes (14) en forme de corps de cylindre, concentriques à l'axe de rotation (11) du rotor (4).

12. Dispositif suivant l'une des revendications 1 à 10, caractérisé en ce que le ressort (3) repoussant le disque de frein (2) contre la garniture de frein (5) est guidé sur les côtés internes radiaux de l'aile (7).

13. Dispositif suivant l'une des revendications 1 à 12, caractérisé en ce que la garniture de frein (5) annulaire, de préférence en liège, éventuellent sectionné une ou plusieurs fois, est logé dans une rainure (17), éventuellement interrompue. dans la flasque (15), solidaire du boîtier, du moteur (1) ou dans le disque de frein (2).
